# EUROPEAN PATENT SPECIFICATION

(11) **EP 1 702 828 B1**
(45) Date of publication and mention of the grant of the patent: **12.11.2008**
(21) Application number: 06075530.3
(22) Date of filing: 07.03.2006
(51) Int. Cl.: B62D 1/184

(54) **Mounting structure for steering column**
Montage-Aufbau für eine Lenksäule
Structure de montage pour colonne de direction

(30) Priority: 17.03.2005 US 82560
(43) Date of publication of application: 20.09.2006
(73) Proprietor: Delphi Technologies, Inc., Troy, MI 48007 (US)
(72) Inventor: Kramer, Paul R., Pinconning, MI 48650 (US); Anspaugh, Michael P., Bay City, MID 48706 (US); Menjak, Damir, Frankenmuth, MI 48734 (US); Cymbal, William D., Freeland, MI 48623 (US)
(74) Representative: Manitz, Finsterwald & Partner GbR

(56) References cited:
- US-A- 5 595 399
- US-A1- 2002 171 235
- US-A1- 2003 164 608

## Description

### TECHNICAL FIELD

The invention relates to a mounting structure for a steering column of a vehicle and more particularly to a steering column adjustable in raking movement.

### BACKGROUND OF THE INVENTION

Steering columns adjustable in raking movement pivot about pivot axis adjacent to the bottom of the column. Raking columns can include two telescoping jackets that move in raking adjustment together between walls defined by a rake bracket mounted to the vehicle. Often, a compression bracket is fixedly mounted to an upper jacket of the two jackets. The walls of the rake bracket are urged against the compression bracket to lock the steering column.

US-A-5 595 399 discloses a structure in accordance with the preamble of claim 1.

### SUMMARY OF THE INVENTION

The invention provides a mounting structure for engaging a vehicle with a steering column adjustable in raking movement, and the corresponding method as described respectively in claims 1 and 15.

### BRIEF DESCRIPTION OF THE DRAWINGS

Advantages of the present invention will be readily appreciated as the same becomes better understood by reference to the following detailed description when considered in connection with the accompanying drawings wherein:
Figure 1 is an exploded view of a steering column assembly incorporating a first exemplary embodiment of the invention;
Figure 2 is a front view of the first exemplary embodiment of the invention;
Figure 3 is a cross-sectional view taken along section lines 3-3 in Figure 2;
Figure 4 is a cross-sectional view of a second exemplary embodiment of the invention corresponding to the cross-sectional view of Figure 3;
Figure 5 is a front view of a third exemplary embodiment of the invention;
Figure 6 is a cross-sectional view taken along section lines 6-6 in Figure 5;
Figure 7 is a cross-sectional view taken along section lines 7-7 in Figure 5;
Figure 8 is a cross-sectional view of a fourth exemplary embodiment of the invention corresponding to the cross-sectional views of Figures 3, 6 and 7;
Figure 9 is a cross-sectional view of a fifth exemplary embodiment of the invention corresponding to the cross-sectional views of Figures 3 and 6-8;
Figure 10 is a front view of a sixth exemplary embodiment of the invention;
Figure 11 is a cross-sectional view taken along section lines 11-11 in Figure 10;
Figure 12 is a front view of a seventh exemplary embodiment of the invention;
Figure 13 is a cross-sectional view of a eighth exemplary embodiment of the invention corresponding to the cross-sectional views of Figures 3 and 6 - 9;
Figure 14 is a cross-sectional view of a ninth exemplary embodiment of the invention corresponding to the cross-sectional views of Figures 3, 6 - 9 and 13; and
Figure 15 is a cross-sectional view of a tenth exemplary embodiment of the invention corresponding to the cross-sectional views of Figures 3, 6 - 9 and 13 - 14.

### DESCRIPTION OF THE PREFERRED EMBODIMENT

A plurality of different embodiments of the invention are shown in the Figures of the application. Similar features are shown in the various embodiments of the invention. Similar features have been numbered with a common reference numeral and have been differentiated by an alphabetic designation. Similar features are structured similarly, operate similarly, and/or have the same function unless otherwise indicated by the drawings or this specification. Furthermore, particular features of one embodiment can replace corresponding features in another embodiment unless otherwise indicated by the drawings or this specification.

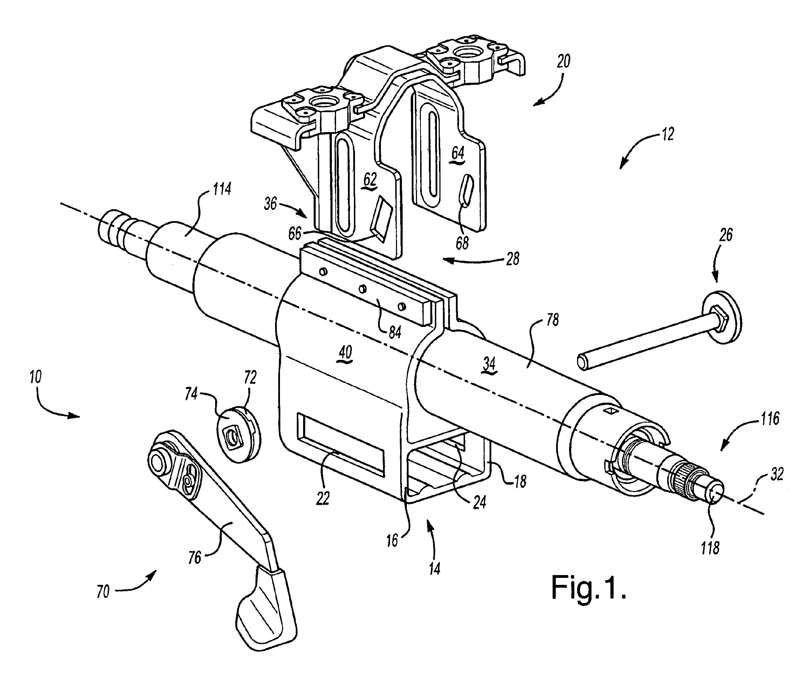

Referring now to Figures 1 - 3, in a first exemplary embodiment of the invention, a mounting structure 10 for engaging a vehicle with a steering column 12 adjustable in raking movement includes a compression bracket 14 having first and second walls 16, 18 spaced from one another. The first and second walls 16, 18 frictionally engage a rake bracket 20. A first aperture 22 is formed in the first wall 16 and a second aperture 24 is formed in the second wall 18. The first and second apertures 16, 18 receive a rake bolt 26. The mounting structure 10 also includes a first clamp 28 cooperating with the compression bracket 14 to define a third aperture 30 extending along an axis 32 to receive a steering column jacket 34. The first clamp 28 is operable to reduce a size of the third aperture 30 at a first position along the axis 32 to selectively clamp the steering column jacket 34. The mounting structure 10 also includes a second clamp 36 cooperating with the compression bracket 14 to define a fourth aperture 38 centered on the axis 32 to receive the steering column jacket 34.

The second clamp 36 is operable to reduce a size of the fourth aperture 38 at a second position along the axis 32 spaced from the first position to selectively clamp the steering column jacket 34.

Both of the first and second clamps 28, 36 are structured similarly to one another an operate similarly. The structure and operation of the clamp 28 will be described in more detail and the description is applicable to the second clamp 36. The first clamp 28 includes first and second halves 40, 42 spaced from one another about the axis 32. A gap is defined between the first and second halves 40, 42 one hundred and eighty degrees from the compression bracket 14. Each of the first and second halves 40, 42 is fixed to the compression bracket 14 at an end opposite the gap. In the first exemplary embodiment of the invention, the first and second halves 40, 42 are integral with the compression bracket 14. A first bolt 44 is threadingly engaged with both of the first and second halves 40, 42 and rotatable. The ends of the first and second halves 40, 42 adjacent to the gap move relative to one another, closer together, in response to rotation of the first bolt 44 in a first direction. The ends of the first and second halves 40, 42 adjacent to the gap move relative to one another, further apart, in response to rotation of the first bolt 44 in a second direction. The first clamp 28 is adjustable based on the cooperation between the first bolt 44 and the first and second halves 40, 42; clamping force being operable to increase in response to increased rotation of the first bolt 44 in the first direction and decrease in response to increased rotation of the first bolt 44 in the second direction. The first half 40 of the first exemplary embodiment of the invention includes a plate 84 defining threads for receiving the first bolt 44. In alternative embodiments of the invention, the first bolt 44 could be self-tapping.

The compression bracket 14 includes a cross channel 86 to enhance the strength of the compression bracket 14. The cross channel 86 is engaged with the first and second walls 16, 18 by welds such as welds 88, 90, 92. A projection 60 extends from the cross channel 86 of the compression bracket 14. The projection is received in a slot 82 formed in the steering column jacket 34. The cooperation between the projection 60 and the slot 82 aligns the compression bracket 14 and the steering column jacket 34 with respect to one another. In alternative embodiments of the invention, a projection could extend between the steering column jacket 34 and one of the first and second halves 40, 42. Also, in alternative embodiments of the invention, a slot for receiving a projection could be defined in any of the first half 40, the second half 42, or the compression bracket 14.

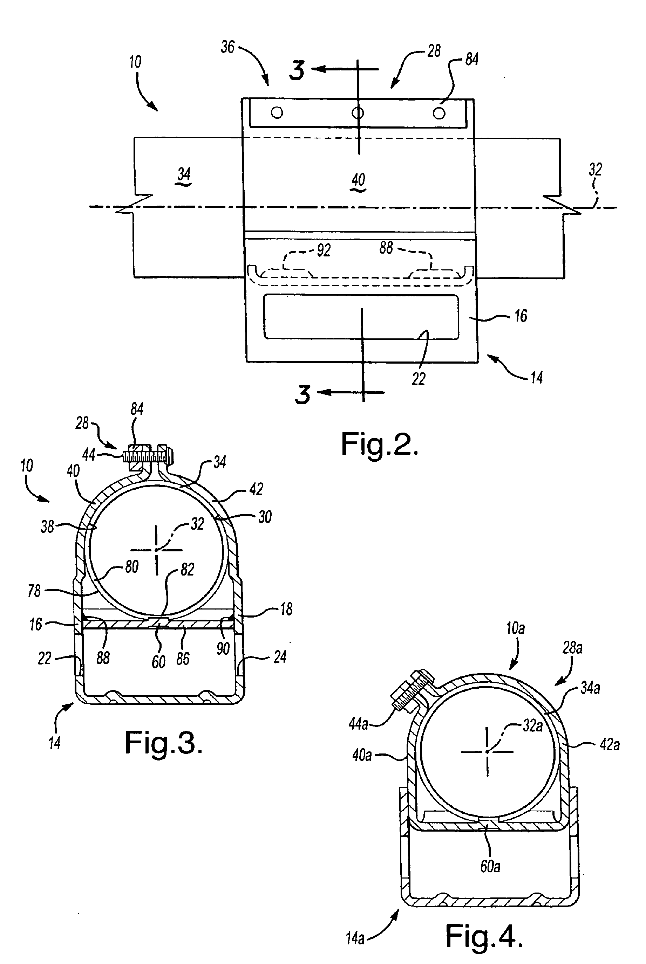

Referring now to Figure 4, in a second exemplary embodiment of the invention, a mounting structure 10a includes a clamp 28a structured similarly to and operating similarly with respect to clamp 28. The first clamp 28a includes first and second halves 40a, 42a spaced from one another about the axis 32a. A gap is defined between the first and second halves 40a, 42a less than one hundred and eighty degrees from a compression bracket 14a. Each of the first and second halves 40a, 42a is fixed to the compression bracket 14a at an end opposite the gap. A self-tapping first bolt 44a is threadingly engaged with both of the first and second halves 40a, 42a and rotatable. A projection 60a extends from the compression bracket 14a and is received in a slot formed in the steering column jacket 34a.

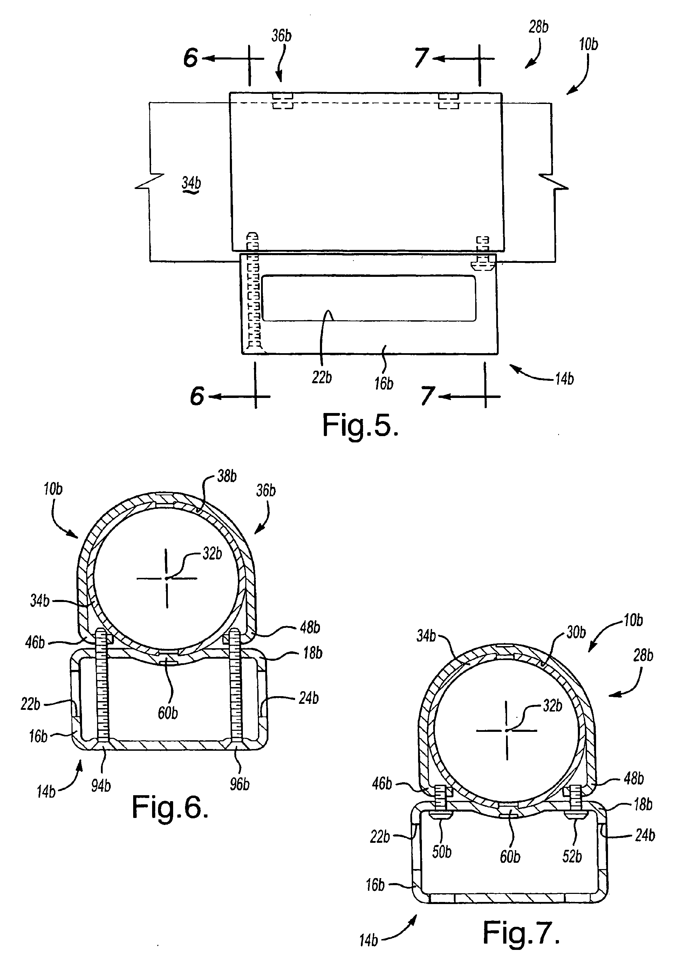

Referring now to Figures 5 - 7, in a third exemplary embodiment of the invention, a mounting structure 10b for engaging a vehicle with a steering column adjustable in raking movement (such as steering column 12 in Figure 1) includes a compression bracket 14b having first and second walls 16b, 18b spaced from one another. The first and second walls 16b, 18b frictionally engaging a rake bracket (such as rake bracket 20 in Figure 1). A first aperture 22b is formed in the first wall 16b and a second aperture 24b is formed in the second wall 18b. The first and second apertures 16b, 18b receive a rake bolt (such as rake bolt 26 in Figure 1). The mounting structure 10b also includes a first clamp 28b cooperating with the compression bracket 14b to define a third aperture 30b extending along an axis 32b to receive a steering column jacket 34b. The first clamp 28b is operable to reduce a size of the third aperture 30b at a first position along the axis 32b to selectively clamp the steering column jacket 34b. The mounting structure 10b also includes a second clamp 36b cooperating with the compression bracket 14b to define a fourth aperture 38b centered on the axis 32b to receive the steering column jacket 34b. The second clamp 36b is operable to reduce a size of the fourth aperture 38b at a second position along the axis 32b spaced from the first position to selectively clamp the steering column jacket 34b.

Both of the first and second clamps 28b, 36b are structured similarly to one another an operate similarly. In the third exemplary embodiment of the invention, the first and second clamps 28b, 36b are substantially integral with one another. The structure and operation of the clamp 28b will be described in more detail and the description is applicable to the second clamp 36b. The first clamp 28b extends between first and second ends 46b, 48b releasibly engaged with the compression bracket 14b. A second bolt 50b is threadingly engaged with the first end 46b and with the compression bracket 14b. A third bolt 52b is threadingly engaged with the second end 48b and with the compression bracket 14b. The first end 46b moves closer to the compression bracket 14b in response to rotation of the second bolt 50b in a first direction. The first end 46b moves away from the compression bracket 14b in response to rotation of the second bolt 50b in a second direction. Likewise, the second end 48b moves closer to the compression bracket 14b in response to rotation of the third bolt 52b in a first direction and moves away from the compression bracket 14b in response to rotation of the third bolt 52b in a second direction. The first clamp 28b is adjustable based on the cooperation between the second and third bolts 50b, 52b, the compression bracket 14b and the first and second ends 46b, 48b; clamping force being operable to increase in response to increased rotation of the second and third bolts 50b, 52b in the first direction and to decrease in response to increased rotation of the second and third bolts 50b, 52b in the second direction. A projection 60b extends from the compression bracket 14b and is received in a slot formed in the steering column jacket 34b.

The second and third bolts 50b, 52b of the first clamp 28b extend through a single side of the compression bracket 14b. Corresponding bolts 94b and 96b extend through two sides of the compression bracket 14b, bottom and top sides. The arrangement of bolts can be selected to simplify the assembly of the compression bracket 14b to the first and second clamps 28b, 36b.

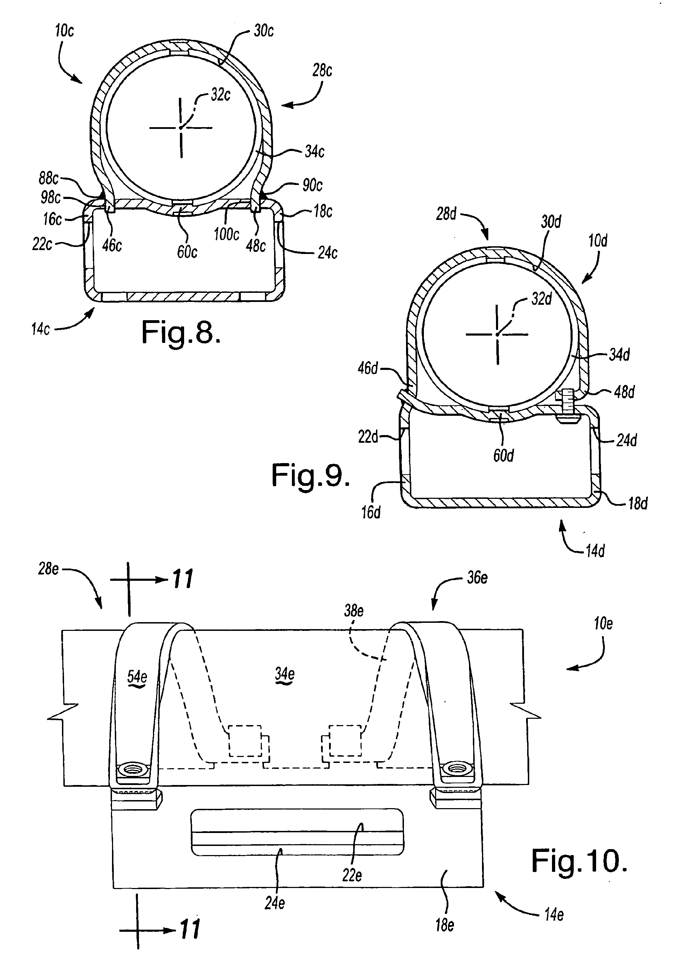

Referring now to Figure 8, in a fourth exemplary embodiment of the invention, a mounting structure 10c for engaging a vehicle with a steering column adjustable in raking movement (such as steering column 12 in Figure 1) includes a compression bracket 14c having first and second walls 16c, 18c spaced from one another. The first and second walls 16c, 18c frictionally engaging a rake bracket (such as rake bracket 20 in Figure 1). A first aperture 22c is formed in the first wall 16c and a second aperture 24c is formed in the second wall 18c. The first and second apertures 16c, 18c receive a rake bolt (such as rake bolt 26 in Figure 1). The mounting structure 10c also includes a first clamp 28c cooperating with the compression bracket 14c to define a third aperture 30c extending along an axis 32c to receive a steering column jacket 34c. The first clamp 28c is operable to reduce a size of the third aperture 30c at a first position along the axis 32c to selectively clamp the steering column jacket 34c. The mounting structure 10c also includes a second clamp cooperating with the compression bracket 14c to define a fourth aperture centered on the axis 32c to receive the steering column jacket 34c. The second clamp is operable to reduce a size of the fourth aperture at a second position along the axis 32c spaced from the first position to selectively clamp the steering column jacket 34c. The second clamp is not shown in the Figure; however the second clamp is structured similarly as first clamp 28c.

The first clamp 28c extends between first and second ends 46c, 48c fixed to the compression bracket 14c. During assembly, the first and second ends **46c, 48c** are extended through slots **98c,** 100c formed in the compression bracket 14c. The first and second ends 46c, 48c are then fixedly connected to the compression bracket 14c with welds 88c, 90c. A projection 60c extends from the compression bracket 14c and is received in a slot formed in the steering column jacket 34c.

Referring now to Figure 9, in a fifth exemplary embodiment of the invention, a mounting structure 10d for engaging a vehicle with a steering column adjustable in raking movement (such as steering column 12 in Figure 1) includes a compression bracket 14d having first and second walls 16d, 18d spaced from one another. The first and second walls 16d, 18d frictionally engaging a rake bracket (such as rake bracket 20 in Figure 1). A first aperture 22d is formed in the first wall 16d and a second aperture 24d is formed in the second wall 18d. The first and second apertures 16d, 18d receive a rake bolt (such as rake bolt 26 in Figure 1). The mounting structure 10d also includes a first clamp 28d cooperating with the compression bracket 14d to define a third aperture 30d extending along an axis 32d to receive a steering column jacket 34d. The first clamp 28d is operable to reduce a size of the third aperture 30d at a first position along the axis 32d to selectively clamp the steering column jacket 34d. The mounting structure 10d also includes a second clamp cooperating with the compression bracket 14d to define a fourth aperture centered on the axis 32d to receive the steering column jacket 34d. The second clamp is operable to reduce a size of the fourth aperture at a second position along the axis 32d spaced from the first position to selectively clamp the steering column jacket 34d. The second clamp is not shown in the Figure; however the second clamp is structured similarly as first clamp 28d.

The fifth exemplary embodiment of the invention includes features of the third and fourth exemplary embodiments of the invention. The first clamp 28d extends between a first end 46d fixedly engaged with the compression bracket 14d and a second end 48d releasibly engaged with the compression bracket 14d. A projection 60d extends from the compression bracket 14d and is received in a slot formed in the steering column jacket 34d.

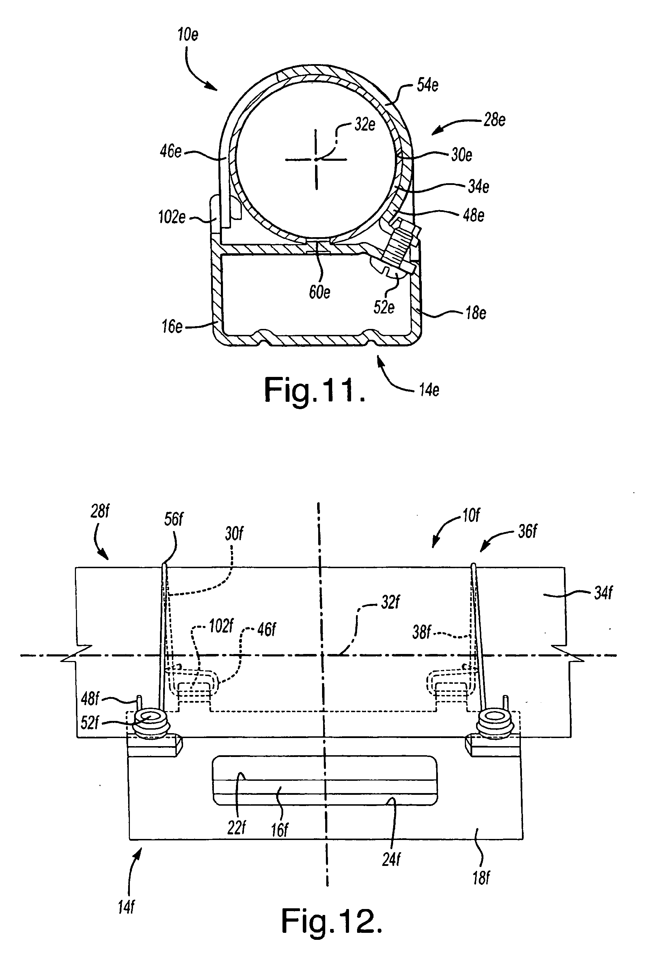

Referring now to Figures 10 and 11, in a sixth exemplary embodiment of the invention, a mounting structure 10e for engaging a vehicle with a steering column adjustable in raking movement (such as steering column 12 in Figure 1) includes a compression bracket 14e having first and second walls 16e, 18e spaced from one another. The first and second walls 16e, 18e frictionally engaging a rake bracket (such as rake bracket 20 in Figure 1). A first aperture 22e is formed in the first wall 16e and a second aperture 24e is formed in the second wall 18e. The first and second apertures 16e, 18e receive a rake bolt (such as rake bolt 26 in Figure 1). The mounting structure 10e also includes a first clamp 28e cooperating with the compression bracket 14e to define a third aperture 30e extending along an axis 32e to receive a steering column jacket 34e. The first clamp 28e is operable to reduce a size of the third aperture 30e at a first position along the axis 32e to selectively clamp the steering column jacket 34e. The mounting structure 10e also includes a second clamp 36e cooperating with the compression bracket 14e to define a fourth aperture 38e centered on the axis 32e to receive the steering column jacket 34e. The second clamp 36e is operable to reduce a size of the fourth aperture 38e at a second position along the axis 32e spaced from the first position to selectively clamp the steering column jacket 34e.

Both of the first and second clamps 28e, 36e are structured similarly to one another and operate similarly. In the sixth exemplary embodiment of the invention, the first and second clamps 28e, 36e are not integral with one another, being spaced from one another. The structure and operation of the clamp 28e will be described in more detail and the description is applicable to the second clamp 36e. The first clamp 28e is formed as a strap 54e and extends between first and second ends 46e, 48e releasibly engaged with the compression bracket 14e. The first end 46e is formed as a hook and engages a hook 102e of the compression bracket 14e. The hook of the first end 46e and the hook 102e arcuately extend in perpendicular planes, best seen when comparing Figures 10 and 11. A third bolt 52e is threadingly engaged with the second end 48e and with the compression bracket 14e. The second end 48e moves closer to the compression bracket 14e in response to rotation of the third bolt 52e in a first direction and moves further from the compression bracket 14e in response to rotation of the third bolt 52e in a second direction. The first clamp 28e is adjustable based on the cooperation between the third bolt 52e, the compression bracket 14e and the second end 48e; clamping force being operable to increase in response to increased rotation of the third bolt 52e in the first direction and to decrease in response to increased rotation of the third bolt 52e in the second direction. A projection 60e extends from the compression bracket 14e and is received in a slot formed in the steering column jacket 34e.

Referring now to Figure 12, in a seventh exemplary embodiment of the invention, a mounting structure 10f for engaging a vehicle with a steering column (such as steering column 12 in Figure 1) adjustable in raking movement includes a compression bracket 14f having first and second walls 16f, 18f spaced from one another. The first and second walls 16f, 18f frictionally engaging a rake bracket (such as rake bracket 20 in Figure 1). A first aperture 22f is formed in the first wall 16f and a second aperture 24f is formed in the second wall 18f. The first and second apertures 16f, 18f receive a rake bolt (such as rake bolt 26 in Figure 1). The mounting structure 10f also includes a first clamp 28f cooperating with the compression bracket 14f to define a third aperture 30f extending along an axis 32f to receive a steering column jacket 34f. The first clamp 28f is operable to reduce a size of the third aperture 30f at a first position along the axis 32f to selectively clamp the steering column jacket 34f. The mounting structure 10f also includes a second clamp 36f cooperating with the compression bracket 14f to define a fourth aperture 38f centered on the axis 32f to receive the steering column jacket 34f. The second clamp 36f is operable to reduce a size of the fourth aperture 38f at a second position along the axis 32f spaced from the first position to selectively clamp the steering column jacket 34f.

Both of the first and second clamps 28f, 36f are structured similarly to one another an operate similarly. In the seventh exemplary embodiment of the invention, the first and second clamps 28f, 36f are spaced from one another. The structure and operation of the clamp 28f will be described in more detail and the description is applicable to the second clamp 36f. The first clamp 28f is formed as a wire 56f and extends between first and second ends 46f, 48f releasibly engaged with the compression bracket 14f. The first end 46f is formed as a hoop and engages a hook 102f of the compression bracket 14f. A third bolt 52f is threadingly engaged with the second end 48f and with the compression bracket 14f. The second end 48f moves closer to the compression bracket 14f in response to rotation of the third bolt 52f in a first direction and moves further from the compression bracket 14f in response to rotation of the third bolt 52f in a second direction. The first clamp 28f is adjustable based on the cooperation between the third bolt 52f, the compression bracket 14f and the second end 48f; clamping force being operable to increase in response to increased rotation of the third bolt 52f in the first direction and decrease in response to increased rotation of the third bolt 52f in the second direction.

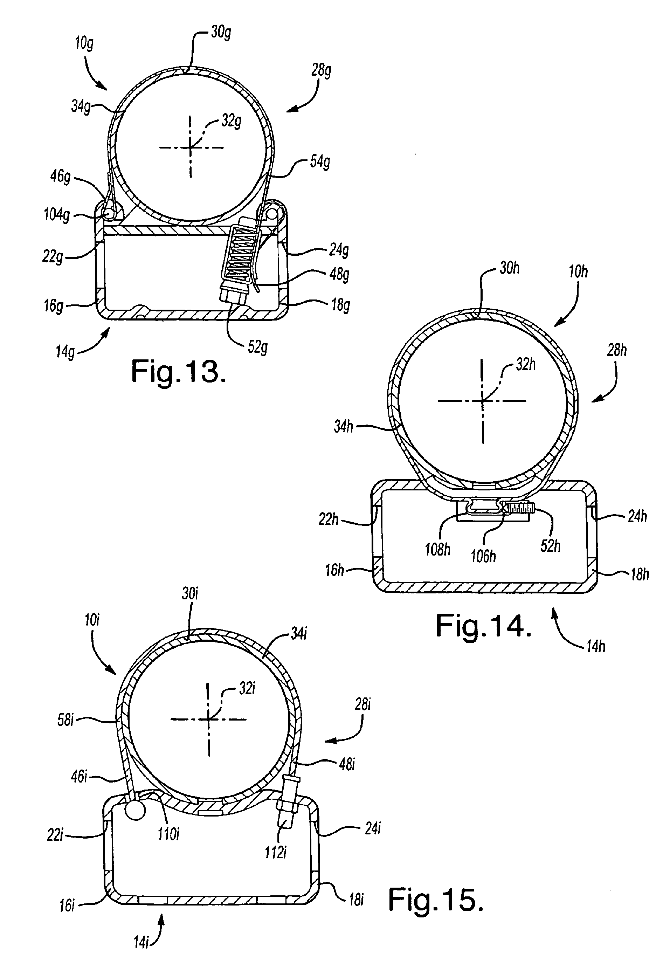

Referring now to Figure 13, in an eighth exemplary embodiment of the invention, a mounting structure 10g for engaging a vehicle with a steering column adjustable in raking movement (such as steering column 12 in Figure 1) includes a compression bracket 14g having first and second walls 16g, 18g spaced from one another. The first and second walls 16g, 18g frictionally engaging a rake bracket (such as rake bracket 20 in Figure 1). A first aperture 22g is formed in the first wall 16g and a second aperture 24g is formed in the second wall 18g. The first and second apertures 16g, 18g receive a rake bolt (such as rake bolt 26 in Figure 1). The mounting structure 10g also includes a first clamp 28g formed as a strap 54g with punch-outs and extending between first and second ends 46g, 48g releasibly engaged with the compression bracket 14g. The first clamp 28g defines an aperture 30g centered on an axis 32g. The aperture 30g receives a steering column jacket 34g. The first end 46g is formed as a hoop and engages a pin 104g of the compression bracket 14g. A third bolt 52g is threadingly engaged with the second end 48g and is supported for stationary rotation by the compression bracket 14g. The second end 48g is drawn further into the interior defined by the compression bracket 14g in response to rotation of the third bolt 52g in a first direction and moves out of the interior of the compression bracket 14g in response to rotation of the third bolt 52g in a second direction. The first clamp 28g is a hose clamp.

Referring now to Figure 14, in a ninth exemplary embodiment of the invention, a mounting structure 10h for engaging a vehicle with a steering column (such as steering column 12 in Figure 1) adjustable in raking movement includes a compression bracket 14h having first and second walls 16h, 18h spaced from one another. The first and second walls 16h, 18h frictionally engaging a rake bracket (such as rake bracket 20 in Figure 1). A first aperture 22h is formed in the first wall 16h and a second aperture 24h is formed in the second wall 18h. The first and second apertures 16h, 18h receive a rake bolt (such as rake bolt 26 in Figure 1). The mounting structure 10h also includes a first clamp 28h cooperating with the compression bracket 14h to define a third aperture 30h extending along an axis 32h to receive a steering column jacket 34h. The first clamp 28h is operable to reduce a size of the third aperture 30h at a first position along the axis 32h to selectively clamp the steering column jacket 34h. The mounting structure 10h also includes a second clamp cooperating with the compression bracket 14h to define a fourth aperture centered on the axis 32h to receive the steering column jacket 34h. The second clamp is operable to reduce a size of the fourth aperture at a second position along the axis 32h spaced from the first position to selectively clamp the steering column jacket 34h. The second clamp is not shown in the Figure; however the second clamp is structured similarly as first clamp 28h.

The clamp 28h is known as a Detiker clamp. A third bolt 52h is rotatable and moves axially in response to rotation. The third bolt 52h moves an anvil 106h to pinch a loop portion 108h a strap 54h of the first clamp 28h and decrease the size of the aperture 30h.

Referring now to Figure 15, in a tenth exemplary embodiment of the invention, a mounting structure 10i for engaging a vehicle with a steering column adjustable in raking movement (such as steering column 12 in Figure 1) includes a compression bracket 14i having first and second walls 16i, 18i spaced from one another. The first and second walls 16i, 18i frictionally engaging a rake bracket (such as rake bracket 20 in Figure 1). A first aperture 22i is formed in the first wall 16i and a second aperture 24i is formed in the second wall 18i. The first and second apertures 16i, 18i receive a rake bolt (such as rake bolt 26 in Figure 1). The mounting structure 10i also includes a first clamp 28i cooperating with the compression bracket 14i to define a third aperture 30i extending along an axis 32i to receive a steering column jacket 34i. The first clamp 28i is operable to reduce a size of the third aperture 30i at a first position along the axis 32i to selectively clamp the steering column jacket 34i. The mounting structure 10i also includes a second clamp cooperating with the compression bracket 14i to define a fourth aperture centered on the axis 32i to receive the steering column jacket 34i. The second clamp is operable to reduce a size of the fourth aperture at a second position along the axis 32i spaced from the first position to selectively clamp the steering column jacket 34i. The second clamp is not shown in the Figure; however the second clamp is structured similarly as first clamp 28i.

The first clamp 28i is formed as a cable 58i and extends between first and second ends 46i, 48i releasibly engaged with the compression bracket 14i. The first end 46i is formed as a ball and engages a slot 110i. The ball is larger than the slot 110i. A threaded member 112i engages the second end 48i and the compression bracket 14i. The second end 48i is drawn further into an interior defined by the compression bracket 14i in response to rotation of the threaded member 112i in a first direction and moves out of the interior in response to rotation of the threaded member 112i in a second direction.

Referring again to Figures 1 - 3, the steering column 12 includes the steering column jacket 34 and a second steering column jacket 114. The jackets 34, 114 house a steering shaft 116 having a steering wheel supporting end 118 and are telescopically adjustable relative to one another. The lengths of the apertures 16 and 18 define the length of telescopic adjustment between the jackets 34, 114. The apertures 16 and 18 of the first exemplary embodiment are slot-like. The steering column jacket 34 includes outer and inner surfaces 78, 80 and extends through the third and fourth apertures 30, 38. The first and second clamps 28, 36 exert a pressing force against the outer surface 78 such that the inner surface 80 is undistorted to fixedly engage the compression bracket 14 and the steering column jacket 34 relative to one another. When a compression bracket is welded to a steering column jacket, the inner surface of the jacket can be distorted which can be undesirable.

The rake bracket 20 is operable to be mounted to a vehicle. The rake bracket includes a third wall 62 facing the first wall 16 and a fourth wall 64 facing the second wall 18. The steering column jacket 34, compression bracket 14 and clamps 28, 30 move along an arcuate path between the walls 62, 64 to adjust the steering wheel supporting end 118 in raking movement. A fifth aperture 66 is formed in the third wall 62 and a sixth aperture 68 is formed in the fourth wall 64. The lengths of the apertures 66 and 68 define the length of adjusting raking movement.

A locking device 70 concurrently urges the third wall 62 against the first wall 16 and the fourth wall 64 against the second wall 18 to lock the steering column 12, preventing telescopic and raking adjustment. The locking device 70 includes the rake bolt 26 that extends through the first and second and fifth and sixth apertures 22, 24, 66, 68. The locking device 70 also includes first and second cams 72, 74 disposed on the rake bolt 26 and a lever 76 disposed to rotate one of the first and second cams 72, 74 relative to the other of the first and second cams 72, 74. When the lever 76 rotates from an unlocked position to a locked position, the cams 72, 74 rotate relative to one another and urge each other apart. The cam 74 can be fixed to the lever 76 and the cam 72 can be slidably received in the fifth aperture 66. Cooperation between the cam 72 and the fifth aperture 66 allows the cam 72 to move in the slot during raking movement and prevents the cam 72 from rotating about the bolt 26. Movement of the cams 72, 74 apart from one another, in cooperation with a head 120 of the bolt 26, presses the walls 16, 18, 62, 64 together.

In alternative embodiments of the invention, any of the ten exemplary embodiments of clamps can be used in conjunction with any other embodiment of clamp to cooperate with a compression bracket to define third and fourth apertures for receiving a steering column jacket.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A mounting structure (10 - 10i) for engaging a vehicle with a steering column (12) adjustable in raking movement comprising:
a compression bracket (14 - 14i) having first and second walls (16 -: 6i, 18 - 18i) spaced from one another for frictionally engaging a rake bracket (20) and a first aperture (22 - 22i) in said first wall (16 - 16i) and a second aperture (24 - 24i) in said second wall (18 - 18i) for receiving a rake bolt (26); and
a first clamp (28 - 28i) cooperating with said compression bracket (14 - 14i) to define a third aperture (30 - 30i) extending along an axis (32 - 32i) to receive a steering column jacket (34 - 34i) wherein said first clamp (28 - 28i) being operable to reduce a size of said third aperture (30 - 30i) at a first position along said axis (32 - 32i) to selectively clamp the steering column jacket (34 - 34i); **characterised by**
a second clamp (36, 36b, 36e, 36f) cooperating with said compression bracket (14 - 14i) to define a fourth aperture (38, 38b, 38e, 38f) centered on said axis (32 - 32i) to receive the steering column jacket (34 - 34i) wherein said second clamp (36, 36b, 36e, 36f) being operable to reduce a size of said fourth aperture (38, 38b, 38e, 38f) at a second position along said axis (32 - 32i) spaced from said first position to selectively clamp the steering column jacket (34 - 34i).

2. The mounting structure (10 - 10b, 10d - 10i) of claim 1 wherein at least one of said first and second clamps (28 - 28b, 28d - 28i, 36, 36b, 36e, 36f) are adjustable.

3. The mounting structure (10 - 10i) of claim 2 wherein both of said first and second clamps (28 -28i, 36, 36b, 36e, 36f) are adjustable.

4. The mounting structure (10, 10a) of claim 1 wherein each of said first and second clamps (28, 28a, 36) further comprises:
first and second halves (40, 40a, 42, 42a) spaced from one another about said axis (32 - 32i) and each being fixed to said compression bracket (14 - 14i); and
a first bolt (44, 44a) threadingly engaged with both of said first and second halves (40, 40a, 42, 42a) and rotatable to move said first and second halves (40, 40a, 42, 42a) relative to one another.

5. The mounting structure (10a) of claim 4 wherein said first bolt (44a) is spaced less than one hundred and eighty degrees from said compression bracket (14a) about said axis (32a).

6. The mounting structure (10b, 10e - 10g, 10i) of claim 1 wherein each of said first and second clamps (28b, 28e - 28g, 28i, 36b, 36e, 36f) extends between first and second ends (46b, 46e - 46g, 46i, 48b, 48e - 48g, 48i) releasibly engaged with said compression bracket (14b,14e- 14i).

7. The mounting structure (10b) of claim 6 wherein each of said first and second clamps (28b, 36b) further comprises:
a second bolt (50b) threadingly engaged with said first end (46b) and with said compression bracket (14b); and
a third bolt (52b) threadingly engaged with said second end (48b) and with said compression bracket (14b).

8. The mounting structure (10b) of claim 7 wherein said second and third bolts (50b, 52b) extend through a single side of said compression bracket (14b).

9. The mounting structure (10e - 10g, 10i) of claim 6 wherein each of said first and second clamps (28b, 28e - 28g, 28i, 36b, 36e, 36f) includes one of a strap (54e, 54g) and a wire (56f) and a cable (58i).

10. The mounting structure (10d) of claim 1 wherein each of said first and second clamps (28d) extends between a first end (46d) fixedly engaged with said compression bracket (14d) and a second end (48d) releasibly engaged with said compression bracket (14d).

11. The mounting structure (10c) of claim 1 wherein each of said first and second clamps (28c) extends between first and second ends (46c, 48c) fixed to said compression bracket (14 - 14i).

12. The mounting structure (10 - 10e, 10h - 10i) of claim 1 further comprising:
at least one projection (60 - 60e, 60h - 60i) extending into one of said third and fourth apertures (30 - 30I, 38, 38b, 38e, 38f) toward said axis (32 - 32i) for aligning said compression bracket (14 - 14e, 14h - 14i) with the steering column jacket (34 - 34e, 34h - 34i).

13. The mounting structure (10) of claim 1 further comprising:
a rake bracket (20) operable to be mounted to a vehicle and having third wall (62) facing said first wall (16) and a fourth wall (64) facing said second wall (18) and fifth aperture (66) formed in said third wall (62) and a sixth aperture (68) formed in said fourth wall (64); and
a locking device (70) having a rake bolt (26) extending through said first and second and fifth and sixth apertures (22, 24, 66, 68) and also having first and second cams (72, 74) disposed on said rake bolt (26) and also having a lever (76) disposed to rotate one of said first and second cams (72, 74) relative to the other of said first and second cams (72, 74) to urge said third and fourth walls (62, 64) against said first and second walls (16, 18).

14. The mounting structure (10) of claim 1 further comprising:
a steering column jacket (34) having outer and inner surfaces (78, 80) and extending through said third and fourth apertures (30, 38) wherein said first and second clamps (28, 36) exert a pressing force against said outer surface (78) such that said inner surface (80) is undistorted to fixedly engage said compression bracket (14) and said steering column jacket (34) relative to one another.

15. A method for engaging a vehicle with a steering column (12) adjustable in raking movement comprising the steps of:
spacing first and second walls (16 -16i, 18 - 18i) of a compression bracket (14 - 14i) from one another for frictionally engaging a rake bracket (20) wherein the compression bracket (14 - 14i) also includes a first aperture (22 - 22i) in the first wall (16 - 16i) and a second aperture (24 - 24i) in the second wall (18 - 18i) for receiving a rake bolt (26); and
selectively clamping the steering column jacket (34 - 34i) with a first clamp (28 - 28i) cooperating with the compression bracket (14 - 14i) to define a third aperture (30 - 30i) extending along an axis (32 - 32i) and receiving a steering column jacket (34 - 34i) wherein the first clamp (28 - 28i) being operable to reduce a size of the third aperture (30 - 30i) at a first position along the axis (32 - 32i); **characterised by**
selectively clamping the steering column jacket (34 - 34i) with a second clamp (36, 36b, 36e, 36f) cooperating with the compression bracket (14 - 14i) to define a fourth aperture (38, 38b, 38e, 38f) centered on the axis (32 - 32i) to receive the steering column jacket (34 - 34i) wherein the second clamp (36, 36b, 36e, 36f) being operable to reduce a size of the fourth aperture (38, 38b, 38e, 38f) at a second position along the axis (32 - 32i) spaced from the first position.

## Patentansprüche

1. Montagestruktur (10 - 10i) zum Kuppeln eines Fahrzeugs mit einer Lenksäule (12), deren Neigungsbewegung einstellbar ist, umfassend:
eine Druckhalterung (14 - 14i) mit einer ersten und einer zweiten Wand (16 - 16i, 18 - 18i), die voneinander beabstandet sind, um mit einer Neigungshalterung (20) über Reibung in Eingriff zu stehen, und einer ersten Öffnung (22 - 22i) in der ersten Wand (16 - 16i) und einer zweiten Öffnung (24 - 24i) in der zweiten Wand (18 - 18i) zur Aufnahme eines Neigungsbolzens (26); und
eine erste Klemme (28 - 28i), die mit der Druckhalterung (14 - 14i) zusammenwirkt, um eine dritte Öffnung (30 - 30i) zu definieren, die sich entlang einer Achse (32 - 32i) erstreckt, um einen Lenksäulenmantel (34 - 34i) aufzunehmen, wobei die erste Klemme (28 - 28i) dazu dient, eine Größe der dritten Öffnung (30 - 30i) an einer ersten Position entlang der Achse (32 - 32i) zu verringern und somit den Lenksäulenmantel (34 - 34i) zu klemmen;
**gekennzeichnet durch**
eine zweite Klemme (36, 36b, 36e, 36f), die mit der Druckhalterung (14 - 14i) zusammenwirkt, um eine vierte Öffnung (38, 38b, 38e, 38f) zu definieren, die auf der Achse (32 - 32i) zentriert ist, um den Lenksäulenmantel (34 - 34i) aufzunehmen, wobei die zweite Klemme (36, 36b, 36e, 36f) dazu dient, eine Größe der vierten Öffnung (38, 38b, 38e, 38f) an einer zweiten Position entlang der Achse (32 - 32i), die von der ersten Position beabstandet ist, zu verringern und somit den Lenksäulenmantel (34 -34i) selektiv zu klemmen.

2. Montagestruktur (10 - 10b, 10d - 10i) nach Anspruch 1,
wobei zumindest eine der ersten und zweiten Klemme (28 - 28b, 28d - 28i, 36, 36b, 36e, 36f) einstellbar ist.

3. Montagestruktur (10 - 10i) nach Anspruch 2,
wobei sowohl die erste als auch die zweite Klemme (28 - 28i, 36, 36b, 36e, 36f) einstellbar sind.

4. Montagestruktur (10, 10a) nach Anspruch 1,
wobei jede der ersten und zweiten Klemme (28, 28a, 36) ferner umfasst:
eine erste und eine zweite Hälfe (40, 40a, 42, 42a), die voneinander um die Achse (32 - 32i) beabstandet sind und jeweils an der Druckhalterung (14 - 14i) befestigt sind; und
einen ersten Bolzen (44, 44a), der mit sowohl der ersten als auch der zweiten Hälfte (40, 40a, 42, 42a) in Gewindeeingriff steht und drehbar ist, um die erste und zweite Hälfte (40, 40a, 42, 42a) relativ zueinander zu bewegen.

5. Montagestruktur (10a) nach Anspruch 4,
wobei der erste Bolzen (44a) weniger als einhundertachtzig Grad von der Druckhalterung (14a) um die Achse (32a) herum beabstandet ist.

6. Montagestruktur (10b, 10e - 10g, 10i) nach Anspruch 1,
wobei jede der ersten und zweiten Klemme (28b, 28e -28g, 28i, 36b, 36e, 36f) sich zwischen einem ersten und einem zweiten Ende (46b, 46e - 46g, 46i, 48b, 48e - 48g, 48i) erstreckt und lösbar mit der Druckhalterung (14b, 14e - 14i) in Eingriff steht.

7. Montagestruktur (10b) nach Anspruch 6,
wobei jede der ersten und zweiten Klemme (28b, 36b) ferner umfasst:
einen zweiten Bolzen (50b), der mit dem ersten Ende (46b) und mit der Druckhalterung (14b) in Gewindeeingriff steht; und
einen dritten Bolzen (52b), der mit dem zweiten Ende (48b) und mit der Druckhalterung (14b) in Gewindeeingriff steht.

8. Montagestruktur (10b) nach Anspruch 7,
wobei der zweite und dritte Bolzen (50b, 52b) sich durch eine einzige Seite der Druckhalterung (14b) erstrecken.

9. Montagestruktur (10e - 10g, 10i) nach Anspruch 6,
wobei jede der ersten und zweiten Klemme (28b, 28e - 28g, 28i, 36b, 36e, 36f) eines umfasst von einem Band (54e, 54g) und einem Draht (56f) und einem Seil (58i).

10. Montagestruktur (10d) nach Anspruch 1,
wobei jede der ersten und zweiten Klemme (28d) sich zwischen einem ersten Ende (46d), das fest mit der Druckhalterung (14d) in Eingriff steht, und einem zweiten Ende (48d) erstreckt, das lösbar mit der Druckhalterung (14d) in Eingriff steht.

11. Montagestruktur (10c) nach Anspruch 1,
wobei jede der ersten und zweiten Klemme (28c) sich zwischen dem ersten und zweiten Ende (46c, 48c) erstreckt, die an der Druckhalterung (14 - 14i) befestigt sind.

12. Montagestruktur (10 - 10e, 10h - 10i) nach Anspruch 1, ferner umfassend:
zumindest einen Vorsprung (60 - 60e, 60h - 60i), der sich eine der dritten und vierten Öffnung (30 - 301, 38, 38b, 38e, 38f) in Richtung der Achse (32 - 32i) zur Ausrichtung der Druckhalterung (14 - 14e, 14h - 14i) mit dem Lenksäulenmantel (34 - 34e, 34h - 34i) erstreckt.

13. Montagestruktur (10) nach Anspruch 1, ferner umfassend:
eine Neigungshalterung (20), die zur Montage an ein Fahrzeug dient und eine dritte Wand (62), die der ersten Wand (16) zugewandt ist, und eine vierte Wand (64), die der zweiten Wand (18) zugewandt ist, und eine fünfte Öffnung (66), die in der dritten Wand (62) ausgebildet ist, und eine sechste Öffnung (68) aufweist, die in der vierten Wand (64) ausgebildet ist; und
eine Verriegelungseinrichtung (70) mit einem Neigungsbolzen (26), der sich durch die erste und zweite und fünfte und sechste Öffnung (22, 24, 66, 68) erstreckt und auch einen ersten und einen zweiten Nocken (72, 74) aufweist, die an dem Neigungsbolzen (26) angeordnet sind, und auch einen Hebel (76) aufweist, der angeordnet ist, um einen von dem ersten und zweiten Nocken (72, 74) relativ zu dem anderen von dem ersten und zweiten Nocken (72, 74) zu drehen und somit die dritte und vierte Wand (62, 64) gegen die erste und zweite Wand (16, 18) zu drängen.

14. Montagestruktur (10) nach Anspruch 1, ferner umfassend:
einen Lenksäulenmantel (34), der eine äußere und eine innere Fläche (78, 80) aufweist und der sich durch die dritte und vierte Öffnung (30, 38) erstreckt, wobei die erste und zweite Klemme (28, 36) eine Druckkraft gegen die Außenfläche (78) ausüben, sodass die Innenfläche (80) unverzerrt ist, um die Druckhalterung (14) und den Lenksäulenmantel (34) relativ zueinander fest in Eingriff zu bringen.

15. Verfahren zum Kuppeln eines Fahrzeugs mit einer Lenksäule (12), deren Neigungsbewegung einstellbar ist, mit den Schritten, dass:
eine erste und eine zweite Wand (16 - 16i, 18 - 18i) einer Druckhalterung (14 - 14i) voneinander beabstandet werden, um über Reibung die Neigungshalterung (20) in Eingriff zu bringen, wobei die Druckhalterung (14 - 14i) auch eine erste Öffnung (22 - 22i) in der ersten Wand (16 - 16i) und eine zweite Öffnung (24 - 24i) in der zweiten Wand (18 - 18i) zur Aufnahme eines Neigungsbolzens (26) aufweist; und
der Lenksäulenmantel (34 - 34i) mit einer ersten Klemme (28 - 28i) selektiv geklemmt wird, die mit einer Druckhalterung (14 - 14i) zusammenwirkt, um eine dritte Öffnung (30 - 30i) zu definieren, die sich entlang einer Achse (32 - 32i) erstreckt, und einen Lenksäulenmantel (34 - 34i) aufzunehmen, wobei die erste Klemme (28 - 28i) dazu dient, eine Größe der dritten Öffnung (30 - 30i) an einer ersten Position entlang der Achse (32 - 32i) zu verringern;
**dadurch gekennzeichnet, dass**
der Lenksäulenmantel (34 - 34i) mit einer zweiten Klemme (36, 36b, 36e, 36f) selektiv geklemmt wird, die mit der Druckhalterung (14 - 14i) zusammenwirkt, um eine vierte Öffnung (38, 38b, 38e, 38f) zu definieren, die auf der Achse (32 - 32i) zentriert ist, um den Lenksäulenmantel (34 - 34i) aufzunehmen, wobei die zweite Klemme (36, 36b, 36e, 36f) dazu dient, eine Größe der vierten Öffnung (38, 38b, 38e, 38f) an einer zweiten Position entlang der Achse (32 - 32i), die von der ersten Position beabstandet ist, zu verringern.

## Revendications

1. Dispositif de montage (10 - 10i) pour équiper un véhicule avec une colonne de direction (12) ajustable par un mouvement d'inclinaison, comprenant :
une bride de compression (14 - 14i) comportant des première et deuxième parois (16 - 16i, 18 - 18i) espacées l'une de l'autre pour recevoir à frottement une bride d'inclinaison (20), et une première ouverture (22 - 22i) dans ladite première paroi (16 - 16i) et une deuxième ouverture (24 - 24i) dans ladite deuxième paroi (18 - 18i) pour recevoir un boulon d'inclinaison (26) ; et
un premier collier (28 - 28i) coopérant avec ladite bride de compression (14 - 14i) pour délimiter une troisième ouverture (30 - 30i) s'étendant le long d'un axe (32 - 32i) pour recevoir une gaine de colonne de direction (34 - 34i), dans lequel ledit premier collier (28 - 28i) est actionnable pour réduire la taille de ladite troisième ouverture (30 - 30i) à une première position le long du dit axe (32 - 32i) afin de serrer sélectivement la gaine de colonne de direction (34 - 34i) ; **caractérisé par** :
un deuxième collier (36, 36b, 36e, 36f) coopérant avec ladite bride de compression (14 - 14i) pour délimiter une quatrième ouverture (38, 38b, 38e, 38f) centrée sur ledit axe (32 - 32i) pour recevoir la gaine de colonne de direction (34 - 34i), dans lequel ledit deuxième collier (36, 36b, 36e, 36f) est actionnable pour réduire la taille de ladite quatrième ouverture (38, 38b, 38e, 38f), à une deuxième position le long du dit axe (32 - 32i) espacée de ladite première position, afin de serrer sélectivement la gaine de colonne de direction (34 - 34i).

2. Le dispositif de montage (10 - 10b, 10d - 10i) de la revendication 1, dans lequel au moins l'un des dits premier et deuxième colliers (28 - 28b, 28d - 28i, 36, 36b, 36e, 36f) est ajustable.

3. Le dispositif de montage (10 - 10i) de la revendication 2, dans lequel lesdits deux premier et deuxième colliers (28 - 28i, 36, 36b, 36e, 36f) sont ajustables.

4. Le dispositif de montage (10, 10a) de la revendication 1, dans lequel chacun des dits premier et deuxième colliers (28, 28a, 36) comprend, en outre :
des première et deuxième moitiés (40, 40a, 42, 42a) espacées l'une de l'autre autour du dit axe (32 - 32i), chacune étant fixée à ladite bride de compression (14 - 14i) ; et
un premier boulon (44, 44a) coopérant par vissage avec lesdites deux première et deuxième moitiés (40, 40a, 42, 42a) et pouvant être tourné pour déplacer lesdites première et deuxième moitiés (40, 40a, 42, 42a) l'une par rapport à l'autre.

5. Le dispositif de montage (10a) de la revendication 4, dans lequel ledit premier boulon (44a) est espacé de moins de 180 degré par rapport à ladite bride de compression (14a) autour du dit axe (32a).

6. Le dispositif de montage (10b, 10e - 10g, 10i) de la revendication 1, dans lequel chacun des dits premier et deuxième colliers (28b, 28e - 28g, 28i, 36b, 36e, 36f) s'étend entre des première et deuxième extrémités (46b, 46e - 46g, 46i, 48b, 48e - 48g, 48i) liées de façon amovible à ladite bride de compression (14b, 14e - 14i).

7. Le dispositif de montage (10b) de la revendication 6, dans lequel chacun des dits premier et deuxième colliers (28b, 36b) comprend, en outre :
un deuxième boulon (50b) coopérant par vissage avec ladite première extrémité (46b) et avec ladite bride de compression (14b) ; et
un troisième boulon (52b) coopérant par vissage avec ladite deuxième extrémité (48b) et avec ladite bride de compression (14b).

8. Le dispositif de montage (10b) de la revendication 7, dans lequel lesdits deuxième et troisième boulons (50b, 52b) s'étendent à travers un seul côté de ladite bride de compression (14b).

9. Le dispositif de montage (10e - 10g, 10i) de la revendication 6, dans lequel chacun des dits premier et deuxième colliers (28b, 28e - 28g, 28i, 36b, 36e, 36f) comprend un organe choisi parmi une bande (54e, 54g), un fil (56f) et un câble (58i).

10. Le dispositif de montage (10d) de la revendication 1, dans lequel chacun des dits premier et deuxième colliers (28d) s'étend entre une première extrémité (46d) fixée à ladite bride de compression (14d) et une deuxième extrémité (48d) liée, de façon amovible, à ladite bride de compression (14d).

11. Le dispositif de montage (10c) de la revendication 1, dans lequel chacun des dits premier et deuxième colliers (28c) s'étend entre des première et deuxième extrémités (46c, 48c) fixées à ladite bride de compression (14 - 14i).

12. Le dispositif de montage (10 - 10e, 10h - 10i) de la revendication 1, comprenant, en outre :
au moins une saillie (60 - 60e, 60h - 60i) s'étendant dans l'une des dites troisième et quatrième ouvertures (30 - 30i, 38, 38b, 38e, 38f) en direction du dit axe (32 - 32i) pour aligner ladite bride de compression (14 - 14e, 14h - 14i) avec la gaine de colonne de direction (34 - 34e, 34h - 34i).

13. Le dispositif de montage (10) de la revendication 1, comprenant, en outre :
une bride d'inclinaison (20) destinée à être installée dans un véhicule, et comportant une troisième paroi (62) orientée vers la première paroi (16) et une quatrième paroi (64) orientée vers ladite deuxième paroi (18), et une cinquième ouverture (66) formée dans ladite troisième paroi (62) et une sixième ouverture (68) formée dans ladite quatrième paroi (64) ; et
un dispositif de verrouillage (70) comportant un boulon d'inclinaison (26) s'étendant à travers lesdites première et deuxième, et cinquième et sixième ouvertures (22, 24, 66, 68) et comportant également des première et deuxième cames (72, 74) disposées sur ledit boulon d'inclinaison (26) et comportant également un levier (76) disposée de façon à tourner l'une des dites première et deuxième cames (72, 74) par rapport à l'autre des dites première et deuxième cames (72, 74) afin de presser lesdites troisième et quatrième parois (62, 64) contre lesdites première et deuxième parois (16, 18).

14. Le dispositif de montage (10) de la revendication 1, comprenant, en outre :
une gaine de colonne de direction (34) comportant des surfaces extérieure et intérieure (78, 80) et s'étendant à travers lesdites troisième et quatrième ouvertures (30, 38), dans lequel lesdits premier et deuxième colliers (28, 36) exercent une force de pression contre ladite surface extérieure (78) de telle façon que ladite surface intérieure (80) ne soit pas déformée pour fixer ladite bride de compression (14) et ladite gaine de colonne de direction (34) l'une avec l'autre.

15. Procédé pour équiper un véhicule avec une colonne de direction (12) ajustable par un mouvement d'inclinaison, comprenant les étapes consistant à :
écarter des première et deuxième parois (16 - 16i, 18 - 18i) d'une bride de compression (14 - 14i) l'une de l'autre afin de recevoir à frottement une bride d'inclinaison (20), dans lequel la bride de compression (14 - 14i) comprend également une première ouverture (22 - 22i) dans la première paroi (16 - 16i) et une deuxième ouverture (24 - 24i) dans la deuxième paroi (18 - 18i) pour recevoir un boulon d'inclinaison (26) ; et
serrer sélectivement la gaine de colonne de direction (34 - 34i) avec un premier collier (28 - 28i) coopérant avec la bride de compression (14 - 14i) pour délimiter une troisième ouverture (30 - 30i) s'étendant le long d'un axe (32 - 32i), et recevant une gaine de colonne de direction (34 - 34i), le premier collier (28 - 28i) étant actionnable pour réduire la taille de la troisième ouverture (30 - 30i) à une première position le long de l'axe (32 - 32i) ;
**caractérisé par** :
le serrage sélectif de la gaine de colonne de direction (34 - 34i) avec un deuxième collier (36, 36b, 36e, 36f) coopérant avec la bride de compression (14 - 14i) pour délimiter une quatrième ouverture (38, 38b, 38e, 38f) centrée sur l'axe (32 - 32i) pour recevoir la gaine de colonne de direction (34 - 34i), le deuxième collier (36, 36b, 36e, 36f) étant actionnable pour réduire la taille de la quatrième ouverture (38, 38b, 38e, 38f) à une deuxième position le long de l'axe (32 - 32i) espacée de la première position.
